# EUROPEAN PATENT SPECIFICATION

(11) **EP 2 261 063 B1**
(45) Date of publication and mention of the grant of the patent: **19.09.2012**
(21) Application number: 10001146.9
(22) Date of filing: 04.02.2010
(51) Int. Cl.: B60C 11/00, B60C 3/00

(54) **Pneumatic tire and method for manufacturing the same**
Luftreifen und Herstellungsverfahren dafür
Pneumatique et son procédé de fabrication

(30) Priority: 12.06.2009 JP 2009141689
(43) Date of publication of application: 15.12.2010
(73) Proprietor: Sumitomo Rubber Industries, Ltd., Kobe-shi, Hyogo-ken (JP)
(72) Inventor: Nakata, Norikatsu, Kobe-shi, Hyogo 651-0072 (JP); Sakamoto, Masayuki, Kobe-shi, Hyogo 651-0072 (JP)
(74) Representative: Manitz, Finsterwald & Partner GbR

(56) References cited:
- WO-A1-2006/009419
- DE-A1- 4 209 687

## Description

### Background of the invention

The present invention relates to a pneumatic tire, more particularly to a pneumatic tire having an internal pattern formed in the inner surface of the tread portion in cooperation with the tread pattern formed in the outer surface of the tread portion, namely, the tread surface, and a method for manufacturing the same.

In general, a pneumatic tire is provided in the tread surface with tread grooves such as circumferential grooves and axial grooves to form a tread pattern, e.g. rib pattern, block pattern, rib-block pattern, lug pattern and the like. Such a grooved part of the tread portion becomes low in the rigidity due to the decreased rubber volume in comparison with non-grooved land part such as rib and block. Therefore, there is a possibility that cracks occur at the groove bottom by being subjected to bending deformation repeated during running and thereby the durability is decreased.

Further, due to the rigidity difference between the grooved part and land part, there is a possibility that the tire uniformity is deteriorated.

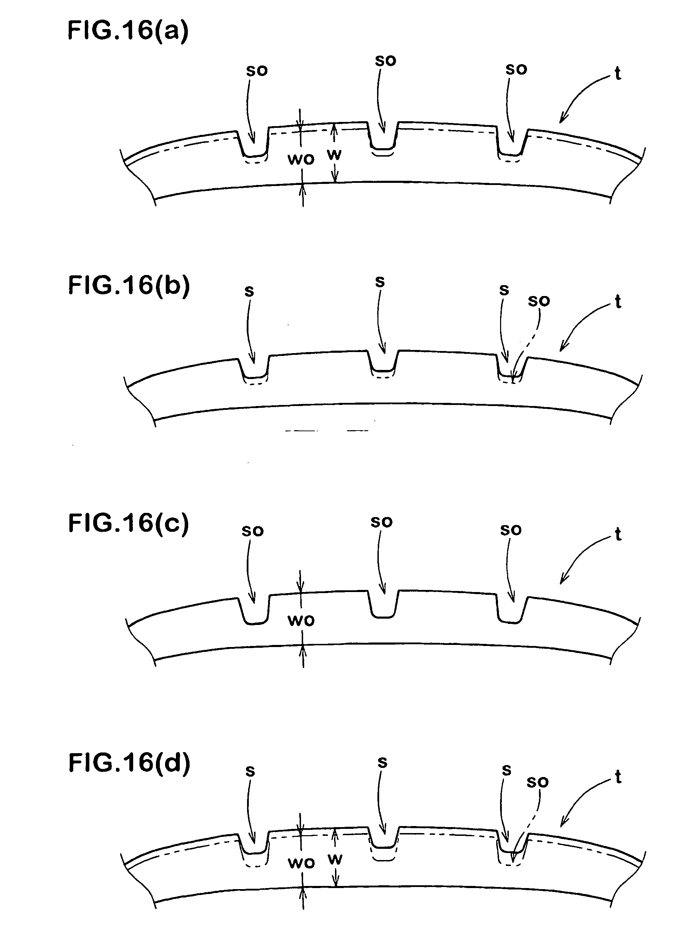

In order to secure a sufficient rigidity in the grooved part, when compared with Fig.16(c) where the tread portion (t) has an original thickness (wo) and tread grooves have an original depth (so), if the thickness (w) of the tread portion (t) is increased as shown in Fig.16(a), the tire weight is unfavorably increased. As shown in Fig.16(b), if the tread groove is decreased to a depth (s) from the original depth (so), the drainage and wet performance are deteriorated.

### Summary of the Invention

It is therefore, an object of the present invention to provide a pneumatic tire and a method for manufacturing the same, in which the durability of the tread portion and uniformity of the tire can be improved.

According to the present invention, a pneumatic tire comprises: a tread portion having a radially inner surface and a radially outer surface defining a tread surface, a pair of sidewall portions, and a pair of bead portions, wherein the tread portion is provided with at least one tread groove disposed in the radially outer surface and accompanied by an internal rib disposed in the radially inner surface beneath the tread groove and protruding from the radially inner surface.

Therefore, the internal rib can increase the rigidity of the tread portion in the grooved part and decrease the rigidity difference. As a result, concentration in the groove bottom of deformation during running is lessened, and the occurrence of cracks at the groove bottom can be prevented.

Further, as the rigidity of the tread portion is evened, the tire uniformity can be improved.

According to the present invention, a method for manufacturing the pneumatic tire comprises the steps of:
forming the unvulcanized raw tire on an annular core mold; and
vulcanizing the raw tire by placing the raw tire in a vulcanizing mold together with the core mold, wherein
the core mold is provided in the outer surface thereof with at least one molding groove for molding at least one internal rib.

In the following description, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load. The standard wheel rim is a wheel rim officially approved for the tire by standard organization, i.e. JATMA (Japan and Asia), T&RA (North America), ETRTO (Europe), STRO (Scandinavia) and the like. The standard pressure and a standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various cold Inflation Pressures" table in TRA or the like. The standard load is the "maximum load capacity" in JATMA, the "Load Capacity" in ETRTO, the maximum value given in the above-mentioned table in TRA or the like.

### Brief Description of the Drawings

Fig.1 is a perspective cross-sectional view of a pneumatic tire according to the present invention.
Fig.2 is a developed partial plan view of the pneumatic tire showing an example of the tread pattern.
Fig.3 is a schematic cross-sectional view of the tread portion showing an example of the dimensional relationship between the tread groove and accompanying internal rib.
Fig.4 is a cross-sectional view taken along line A-A in Fig.2.
Fig.5(a) is a schematic view of a part of the tread portion viewed from the inside of the tire showing an example of the positional relationship between the tread groove and accompanying internal rib.
Fig.5(b) shows another example of the positional relationship between the tread groove and accompanying internal rib.
Fig.5(c) shows the tread groove and another example of the accompanying internal rib and an example of the positional relationship therebetween.
Fig.6 is a schematic cross-sectional view of a core mold used in the method for manufacturing the pneumatic tire according to the present invention.
Fig.7 is a schematic perspective cross-sectional view showing the divided pieces forming the outer surface of the core mold.
Fig.8 is a schematic cross-sectional partial view of the core mold.
Fig.9(a) is a cross-sectional view of a groove for molding the internal rib in a state that the groove is filled with windings of a narrow-width unvulcanized rubber tape and a sheet of inner liner rubber covers the outside thereof.
Fig.9(b) is a cross-sectional view of a groove for molding the internal rib in a state that the narrow-width unvulcanized rubber tape is wound so that the windings fill up the groove and form the inner liner rubber.
Fig.9(c) is an enlarged cross-sectional view of the narrow-width unvulcanized rubber tape.
Fig.10(a) is a perspective view of an unvulcanized carcass ply tape.
Fig.10(b) is a perspective view showing a state that a plurality of unvulcanized carcass ply tapes are applied to the core mold to form a carcass ply.
Fig.11(a) is a perspective view of a carcass ply strip provided with a plurality of side slits.
Fig.11(b) is a perspective view showing a state that the carcass ply strip with the side slits is wound around the core mold to form a carcass ply.
Fig.12 is a cross-sectional view of a raw tire built on the core mold.
Fig.13 is a cross-sectional view of the raw tire placed in a vulcanizing mold together with the core mold.
Fig.14 is a cross-sectional view of another example the pneumatic tire according to the present invention.
Fig.15 is a schematic cross-sectional view of the tread portion thereof showing an example of the dimensional relationship between the tread groove and accompanying internal rib.
Fig.16(a) is a schematic cross-sectional view showing a tread portion whose thickness (w) is increased from the original thickness (wo).
Fig.16(b) is a schematic cross-sectional view showing a tread portion in which the depth (s) of the tread groove is decreased from the original depth (so).
Fig.16(b) is a schematic cross-sectional view showing the tread portion having the original thickness (wo) and the original depth (so).
Fig.16(d) is a schematic cross-sectional view showing a tread portion in which the thickness (w) thereof is increased from the original thickness (wo) and the depth (s) of the tread groove is decreased from the original depth (so).

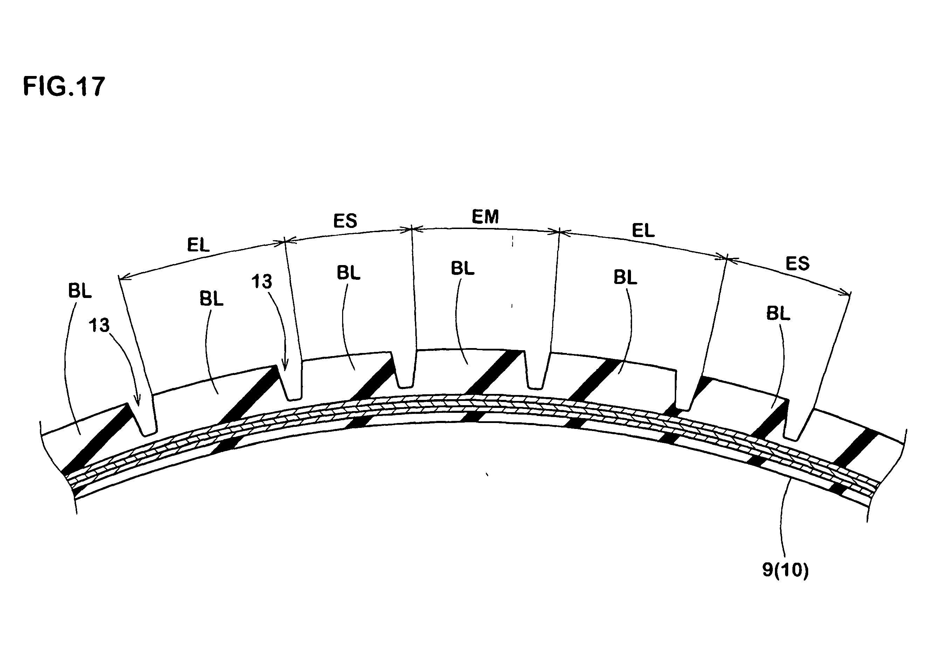

Fig.17 is a circumferential cross-sectional view of a pneumatic tire in which a variable pitching method is employed in arranging axial tread grooves.

### Description of the Preferred Embodiments

Embodiments of the present invention will now be described in detail in conjunction with the accompanying drawings.

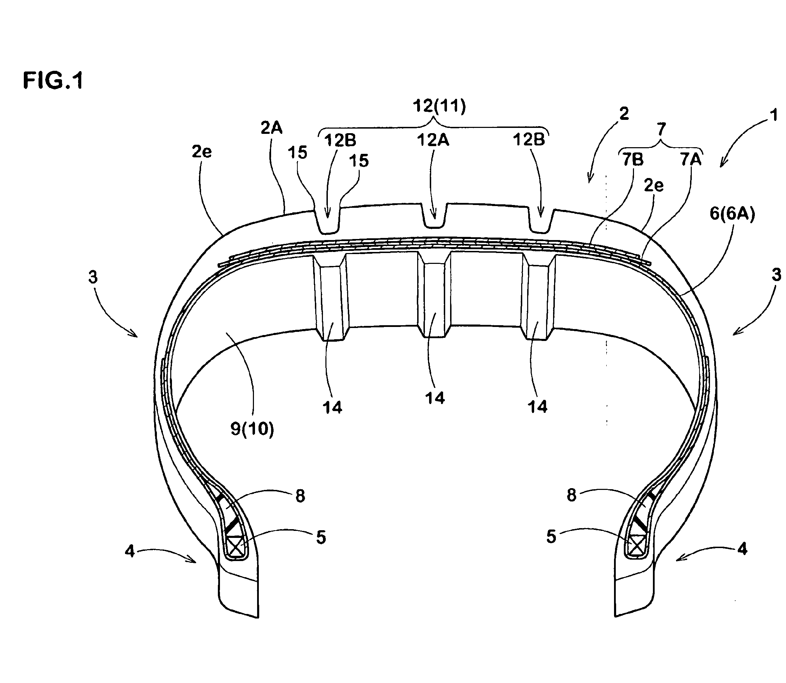

As shown in Fig.1, pneumatic tire 1 according to the present invention comprises: a tread portion 2; a pair of sidewall portions 3; a pair of bead portions 4 with a bead core 5 therein; a carcass 6 comprising a carcass ply 6A extending between the bead portions 4 through the tread portion 2 and sidewall portions 3 and turned up around the bead core 5 in each bead portion; a belt layer 7 comprising at least two belt plies 7A and 7B disposed radially outside the carcass in the tread portion 2; a bead apex rubber 8 disposed in each of the bead portions 4 and extending radially outwardly from the bead core 5 in a tapered manner; and an inner liner rubber 9 disposed on the inside of the carcass 6 and extended between the bead portions 4 defining the inner surface 10 of the tire.

The tread portion 2 is provided with at least one, in this embodiment, a plurality of tread grooves 11, forming a tread pattern.

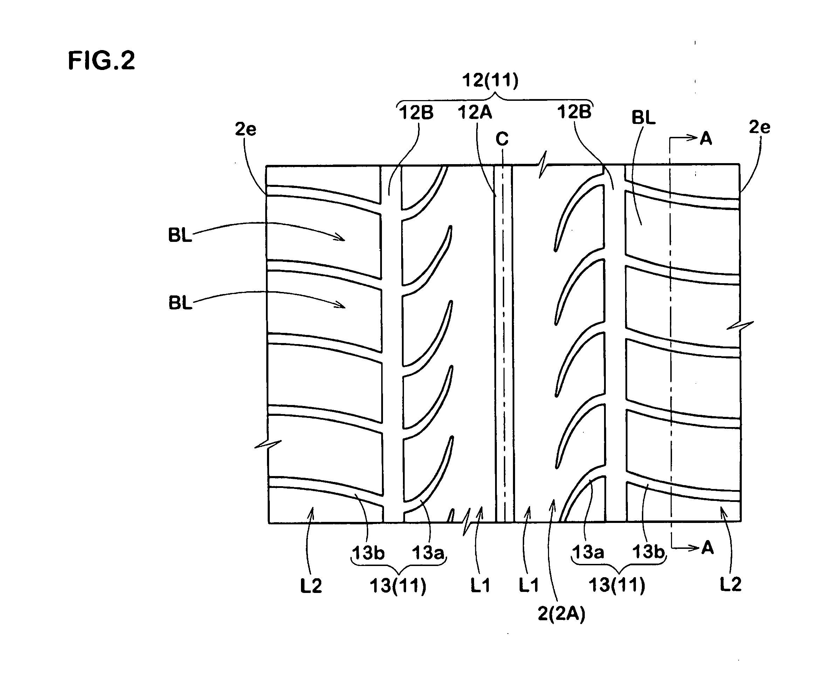

In this embodiment, as shown in Fig.2, the tread grooves 11 include: a plurality of circumferentially extending main grooves 12; and a plurality of axial grooves 13 extending crosswise to the tire circumferential direction.

The main grooves 12 include: a central main groove 12A extending on the tire equator C; and an outer main groove 12B disposed on each side of the central main groove 12A. The main grooves 12A and 12B in this example are straight, but one or more of them may be zigzag.
In order to provide a drain function, the main grooves 12A and 12B are preferably provided with
a groove width wa1 of from 5.0 to 15.0 mm at the tread surface, a groove width wa2 of from 3.0 to 13.0 mm at the groove bottom, a depth Da of 6.0 to 15.0 mm, and
a cross-sectional area S2 of from 25.0 to 150.0 sq.mm in the cross section perpendicular to the longitudinal direction of the main groove 12.

In the case that the groove bottom is rounded, the groove bottom width wa2 can be defined, in the cross-section of the groove, as the distance between the intersecting points of a line parallel with the tread surface 2A or tread profile line passing through the deepest point of the groove bottom 16 and two extended lines of the groove sidewalls 19. This definition is applied to not only the main grooves 12 but also the axial grooves 13.

The axial grooves 13 include: a plurality of first axial grooves 13a extending from the main groove 12B towards the central main groove 12A but terminated before the central main groove 12A; and a plurality of second axial grooves 13b extending from the outer main groove 12B to the tread edge 2e and terminated at a position axially outwardly beyond the tread edge 2e.

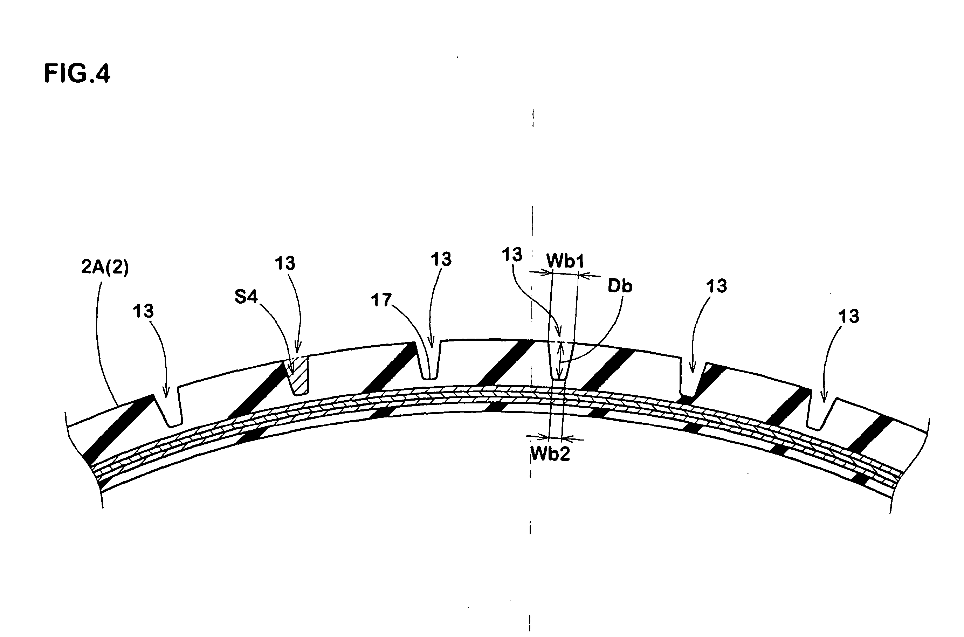

Fig.4 shows a cross-sectional view taken along line A-A in Fig.2.

In order to provide a drain function, the axial groove 13 is preferably provided with
a groove width wb1 of from 3.0 to 10.0 mm at the tread surface,
a groove width wb2 of from 1.0 to 10.0 mm at the groove bottom,
a depth Db of from 6.0 to 15.0 mm, and
a cross-sectional area S4 of from 20.0 to 100.0 sq.mm in the cross section perpendicular to the longitudinal direction of the axial groove 13.

The tread portion 2 is provided with the tread pattern which comprises a circumferentially continuously extending rib L1 formed between the central main groove 12A and each of the outer main grooves 12B, and further, a row L2 of circumferentially arranged blocks BL divided by the second axial grooves 13b formed between each of the outer main grooves 12B and the adjacent tread edge 2e.

The tread pattern is not to be limited to the shown in Fig.2. Various tread patterns may be employed.

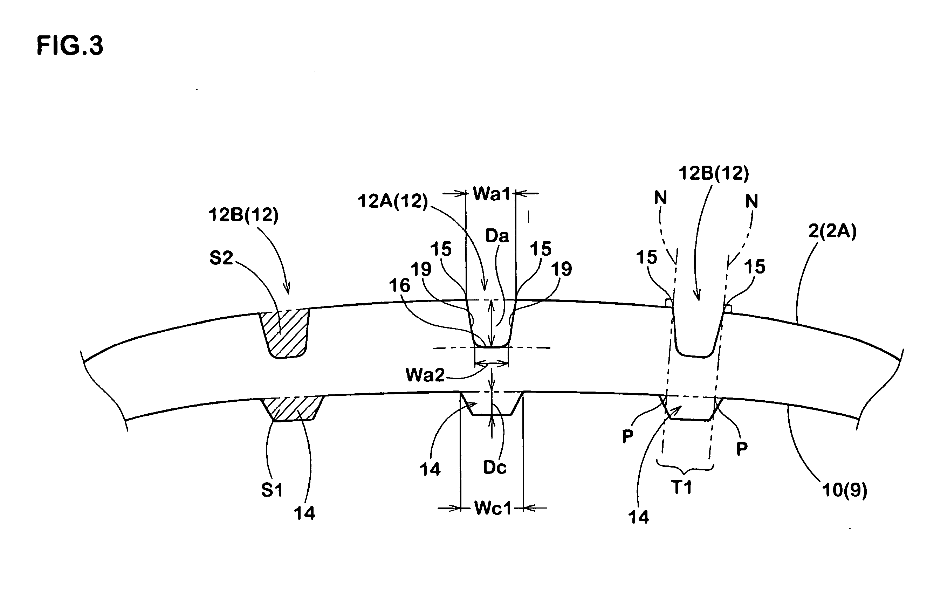

According to one aspect of the present invention, as shown in Fig.1 and Fig.3, the radially inner surface 10 of the tread portion 2 is provided with an internal pattern comprising radially inwardly protruding internal ribs 14 (optionally internal ribs 18).

The internal rib 14 (18) is made of rubber. For example, the same rubber compound as the inner liner rubber 9 can be used for the internal rib. It is also possible to use a different rubber compound. In either case, it is preferable that the JIS type A durometer hardness thereof is in a range of from 65 to 95 at a temperature 23 deg.c.

In this embodiment, each of the internal ribs 14 is positioned in a region T1 beneath one of the main grooves 12, and extends straight and continuously along the entire length of the main groove 12.

Here, as shown in Fig.3, the region T1 is defined between two lines p which are the edge lines 15 of the main groove 12 projected on the inner surface 10 of the tread portion in the direction normal to the tread surface. This definition of the region 15 is also applied to all of the tread grooves including axial grooves in addition to the circumferential main grooves 12.

By the internal ribs, the grooved parts of the tread portion are increased in the rigidity. As a result, the rigidity difference from the rib and block row is decreased, and the rigidity distribution is evened. Thereby, a stress concentration on the main groove bottom 16 can be mitigated, and the occurrence of cracks at the groove bottom can be effectively controlled, and the durability is improved. Further, the tire uniformity can be improved. Furthermore, since the internal ribs 14 are partially formed in the tread portion, the increases in the tire weight can be minimized. The internal ribs 14 do not decrease the main groove depth, and do not deteriorate the drainage. Accordingly, the internal ribs 14 can improve the durability and tire uniformity without sacrificing the tire performance as originally provided.

If the internal rib 14 is too small, it is difficult to increase the rigidity sufficiently near the main groove bottom. If too large, on the other hand, the weight of the tread portion is undesirably increased, and the rigidity difference is rather increased. From this standpoint, the width wc1, height Dc and cross-sectional area S1 of the internal rib 14 are limited as follows.

The width wc1 of the internal rib 14 at the radially inner surface 10 is preferably set in a range of not less than 150 %, more preferably not less than 180 %, still more preferably not less than 210 %, but not more than 250 %, more preferably not more than 240 %, still more preferably not more than 230 % of the width wa2 of the main groove 12 at the groove bottom.

The height Dc of the internal rib 14 from the radially inner surface 10 is preferably set in a range of not less than 30 %, more preferably not less than 35 %, still more preferably not less than 40, but not more than 60 %, more preferably not more than 55 %, still more preferably not more than 50 % of the depth Da of the main groove 12.

The cross-sectional area S1 of the internal rib 14 in the cross section perpendicular to its longitudinal direction is preferably set in a range of not less than 50 %, more preferably not less than 70 %, but not more than 100 %, more preferably not more than 90 % the cross-sectional area s2 of the main groove 12 in the cross section perpendicular to its longitudinal direction.

In this embodiment, the width wc1, height Dc and cross-sectional area S1 are constant along the entire length of the internal rib 14. In other words, the cross-sectional shape is constant. But, the cross-sectional shape may be varied. Further, it may be possible to form the internal rib 14 discontinuously in the tire circumferential direction. In the case of the discontinuous internal rib 14, the total length should be not less than 50 %, more preferably not less than 70 %, still more preferably not less than 90 % of the overall length.

In this embodiment, the sectional shape of the internal rib 14 is a trapezoid whose axially width continuously decreases toward the radially inside of the tire.

However, another shape, for example, semicircle, rectangle or the like can be used.

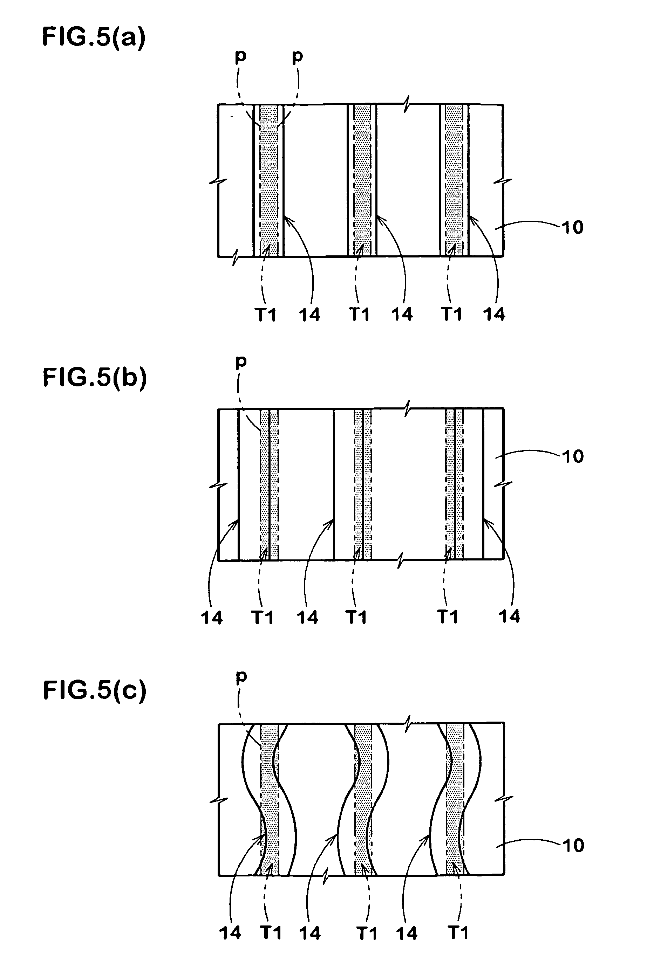

Figs.5(a)-5(c) each show a part of the tread portion viewed from the inside of the tire.
As shown in Fig.5(a), the internal rib 14 in this embodiment extend straight along the main groove 12 to cover the entirety of the above-mentioned region T1.

In Fig.5(b), the internal rib 14 extends straight along the main groove 12 overlapping with a part of the region T1. In Fig.5(c), although the main groove 12 is straight as explained above, the internal rib 14 extends zigzag along the main groove 12 overlapping with at least a part of the region T1.

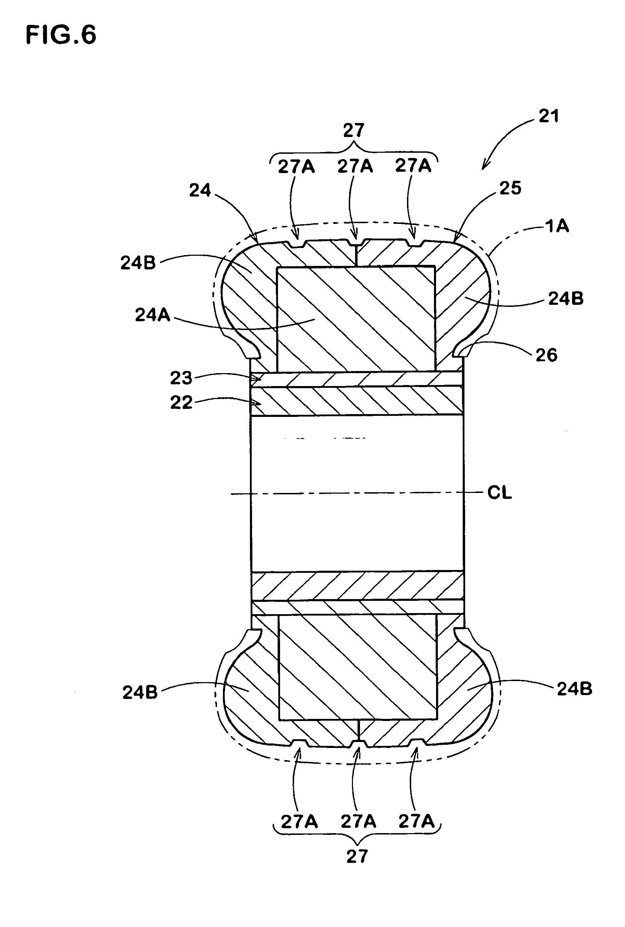

The pneumatic tire 1 can be manufactured by building a raw tire 1A around a core mold 21 as shown in Fig.6. Then, the raw tire 1A is placed in a vulcanization mold M together with the core mold 21, and vulcanized.

The core mold 21 is a split mold made up of, for example, an annular inner ring 22 coaxial with the tire revolution axis

CL, an annular middle ring 23 fitted around the radially outside of the inner ring 22, and an annular outer ring 24 fitted around the middle ring 23 and defining a surface for shaping the tire inner surface 10.

The outer ring 24 is composed of a central core piece 24A, and a pair of right-hand and left-hand divided pieces 24B disposed one on each side of the central core piece 24A so as to cover the core piece 24A.
Each of the pieces 24A and 24B is collectively formed by circumferentially divided sector segments which are annularly arranged in a substantially continuous manner.

The divided pieces 24B form the outer surface of the core mold 21 including: a molding surface 25 for molding the inner surface 10 of the tire; and a pair of molding surface 26 for molding the bead bottom protruding axial outside from the radially inner end of the molding surface 25.

The core mold 21 can be removed from the raw tire 1A or vulcanized tire 1 by disassembling the core mold 21 by taking out the inner ring 22 and middle ring 23 in the axial direction, then moving the core piece 24A radially inward and taking out the divided pieces 24B.

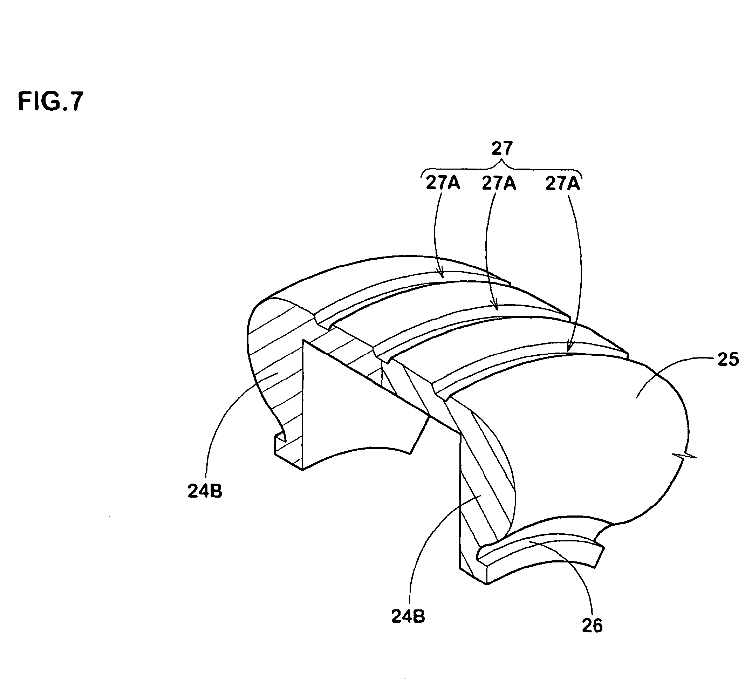

The molding surface 25 is provided in the crown portion with grooves 27 for molding the internal ribs 14. In this embodiment, as shown in Fig.6 and Fig.7, the grooves 27 include three circumferential grooves 27A.

Each of the circumferential grooves 27A has a complemental shape of the corresponding internal rib 14.

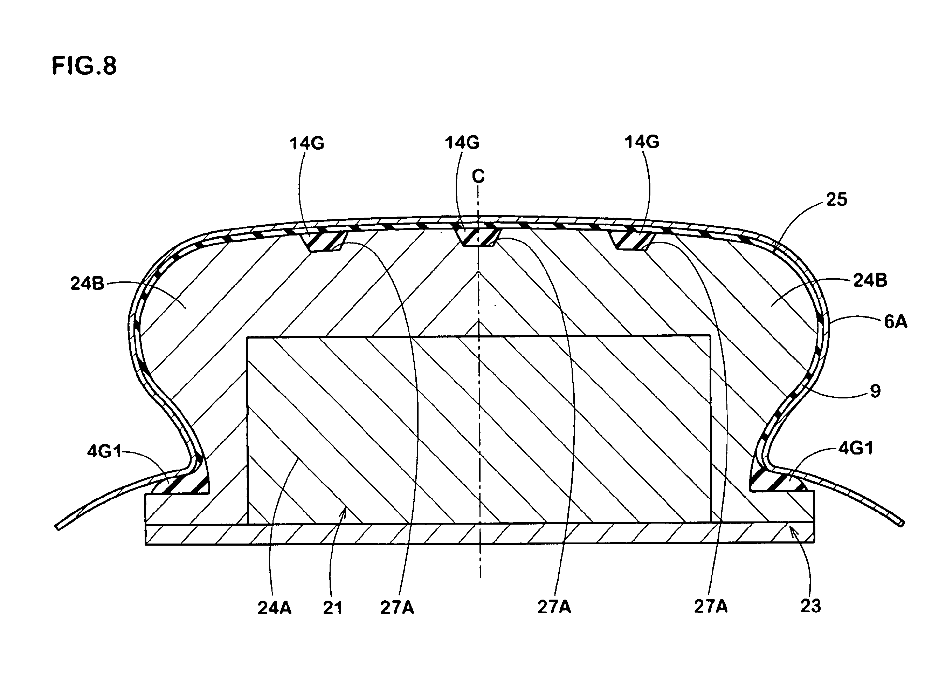

In the process for building the raw tire, as shown in Fig.8, the circumferential grooves 27A of the core mold 21 are filled with a raw rubber material 14G of the internal ribs 14. Then, on the molding surface 25 of the core mold 21, a raw clinch rubber 4G1 forming the part contacting with the wheel rim, a raw inner liner rubber 9, and a raw carcass ply 6A are applied in predetermined order.

Here, the term "raw" means a semi-vulcanized state in addition to an unvulcanized state of the rubber.

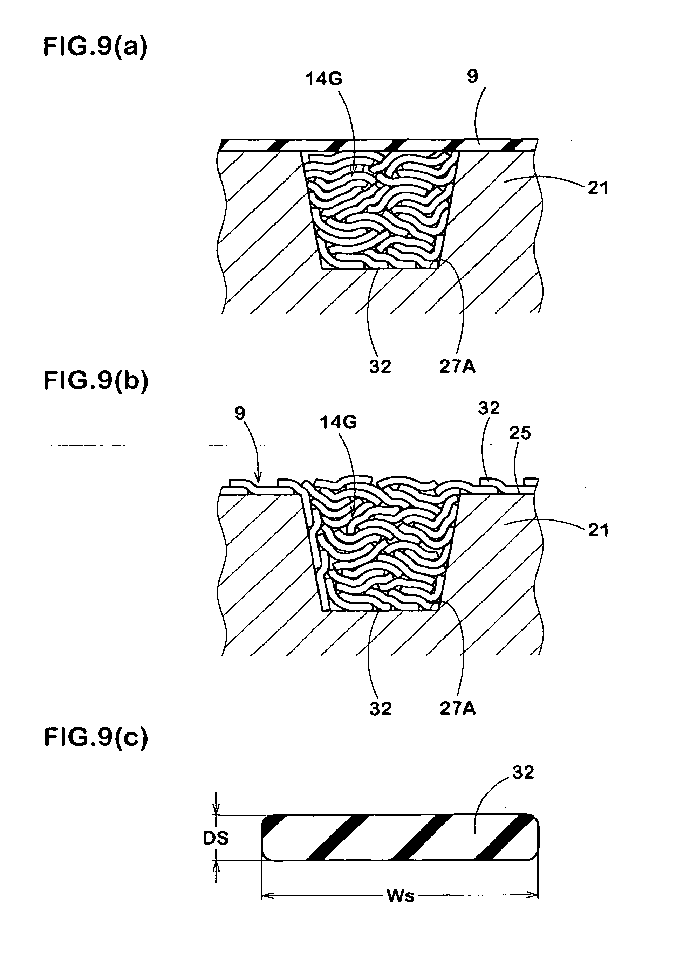

As shown in Fig.9(a), a narrow-width unvulcanized rubber tape 32 is wound a large number of times so as to fill up the circumferential groove 27A as the raw rubber material 14G. In contrast, the inner liner rubber 9 disposed on the radially outside of the rubber material 14G is a wide sheet. However, it is also possible to form the inner liner rubber 9 by spirally winding the rubber tape 32 around the molding surface 25 of the core mold 21 as shown in Fig.9(b) to form it together with the rubber material 14G. In this case, the unity of the rubber 9 and 14 may increased.

As to the size of the rubber tape 32, as shown in Fig.9(c), it is preferable that the width ws is in a range of from 5 to 30 mm, and the thickness Ds is in a range of from 0.5 to 3.5 mm. The cross-sectional shape of the rubber tape 32 in this example is a flat rectangle.

As to the method for making the carcass ply 6A,

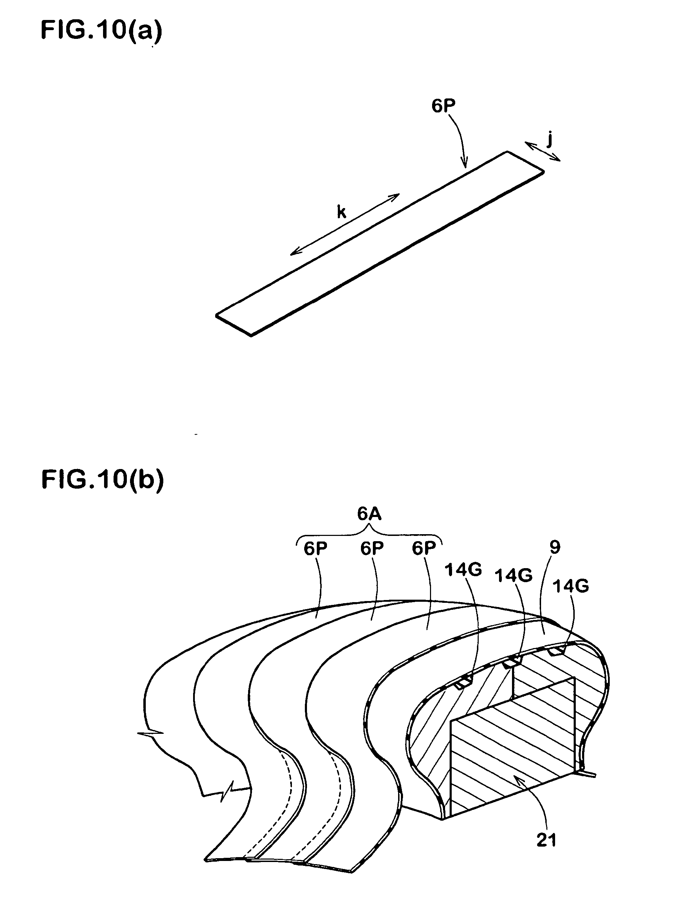

Figs.10(a) and 10(b) show an example, and

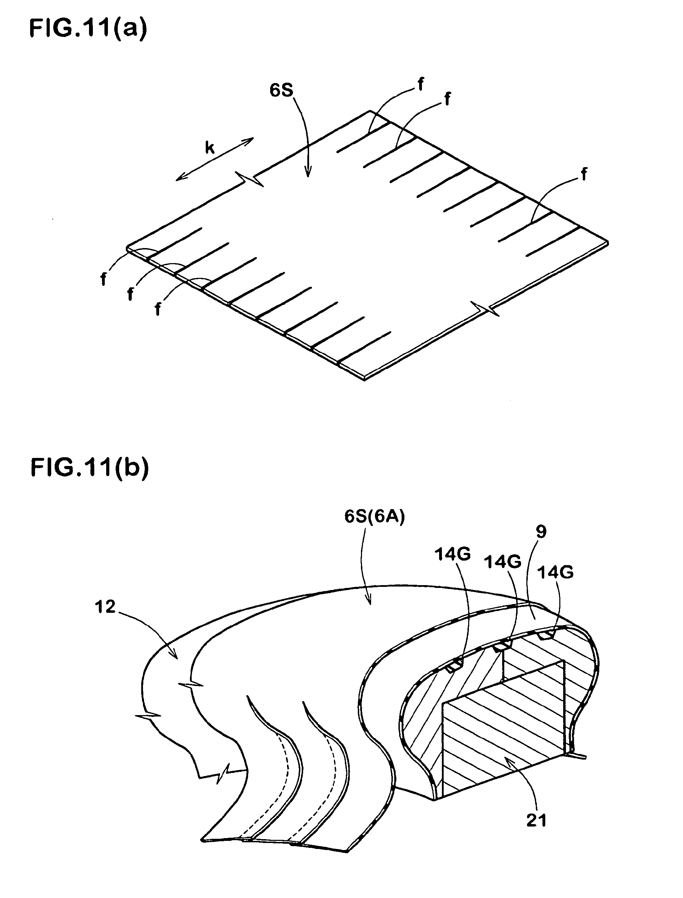

Figs.11(a) and 11(b) show another example of the method.

In the former example, the carcass ply 6A is formed by applying a number of carcass ply tapes 6P around the core mold 21 as shown in Fig.10(b).

As shown in Fig.10(a), the carcass ply tape 6P has an axial dimension k larger than its circumferential dimension j, and a plurality of parallel carcass cords are embedded in the topping rubber along the entire length thereof (in the direction of the axial dimension k).

At least in the tread portion 2 and radially outer part of the sidewall portions 3, there is no gap between the circumferentially arranged the carcass ply tapes. In other words, in the above range, the edges of the carcass ply tapes 6P are but-jointed. In the bead portions 4, however, the edges of the carcass ply tapes 6P are overlap-jointed.

In the later example, the carcass ply 6A is formed by winding a carcass ply strip 6S at least once around the core mold 21.

The carcass ply strip 6S is similar to the conventional carcass ply strips, but as shown in Fig.11(a), the side edges are provided with a plurality of slits (f) at regular intervals in the longitudinal direction (tire circumferential direction).

In the carcass ply strip 6s, the carcass cords extend in the axial direction (k) and the slits (f) are formed by cutting the topping rubber between the cords.

The narrow portions of the side edges divided by the slits (f) are positioned in the bead portions, and overlap-jointed as shown in Fig.11(b) similarly to the former example.

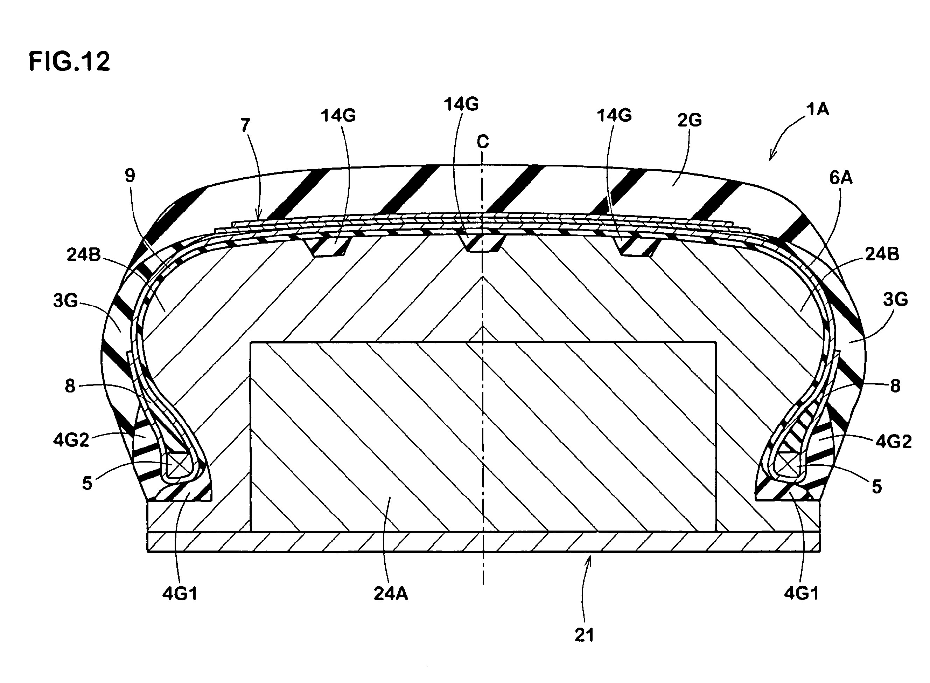

After the carcass ply is formed, as shown in Fig.12, the annular bead core 5 is placed on each side of the toroidal carcass ply 6A, the bead apex rubber 8 is applied to toroidal carcass ply 6A, and the edges of the carcass ply 6A are turned up around the bead cores 5. Thereby, the carcass assembly is formed.

On the carcass assembly, the clinch rubber 4G2, sidewall rubber 3G, belt layer 7 and tread rubber 2G and the like are further applied to. Thus, a raw tire 1A is formed on the outside of the core mold 21.

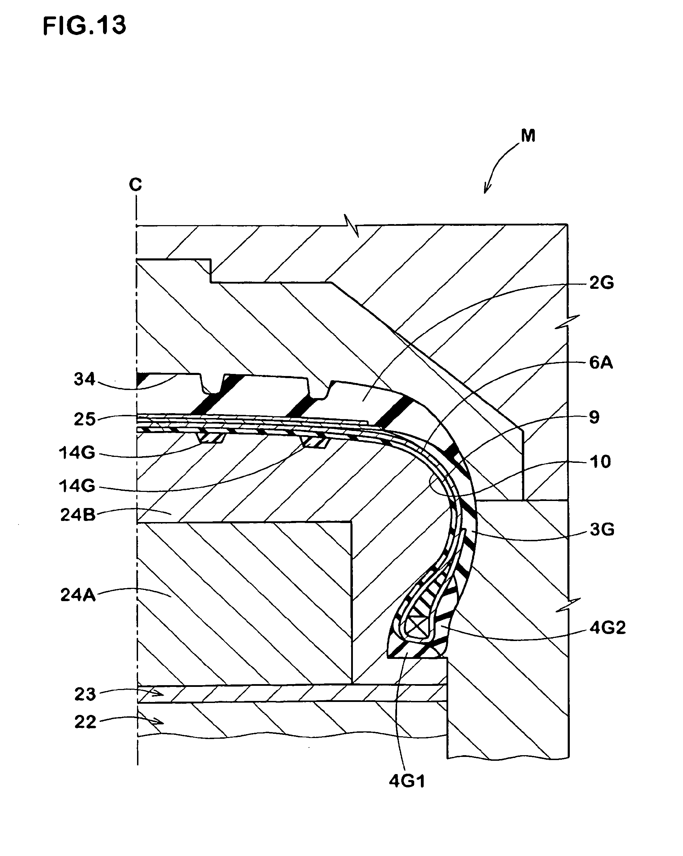

Then, the raw tire 1A is put in a vulcanization mold M together with the core mold 21 as shown in Fig.13, and vulcanized by heating the vulcanization mold M.

The vulcanization mold M is a split mold which can be divided in the radial direction and axial direction of the tire.

During vulcanizing the raw tire 1A, the core mold 21 is subjected to a high temperature, therefore, the core mold 21 is made of a metal material. For example, an aluminum base alloy having a low specific heat capacity can be suitably used particularly in the case that the core mold 21 is not heated. Of course, the core mold 21 can be heated by the use of a heating medium, electrical heat or the like.

Upon completion of the vulcanization, the vulcanization mold M is detached from the tire 1, and then the core mold 21 is disassembled and detached from the tire 1 as explained above.

In this embodiment, the internal ribs 14 are provided along the circumferentially extending main grooves 12 only.

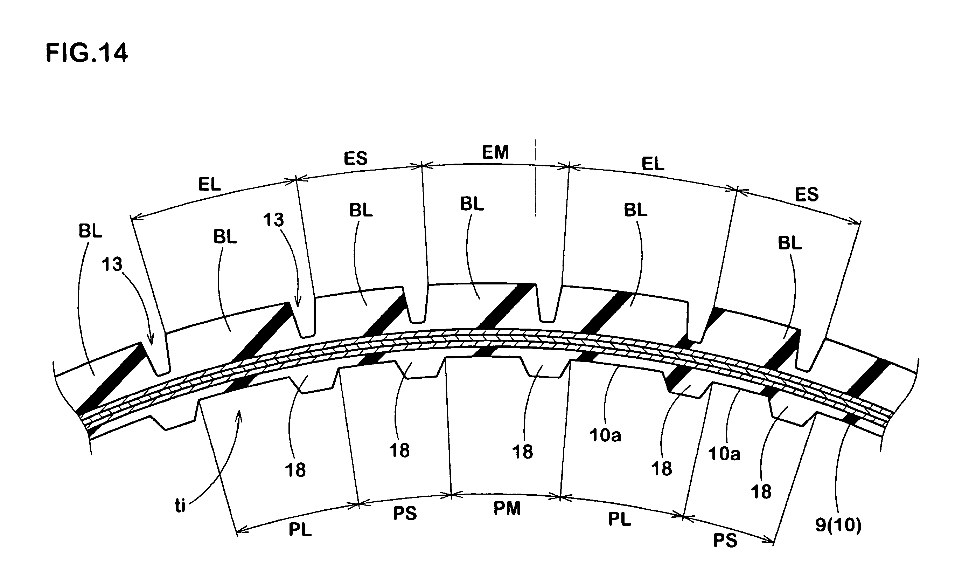

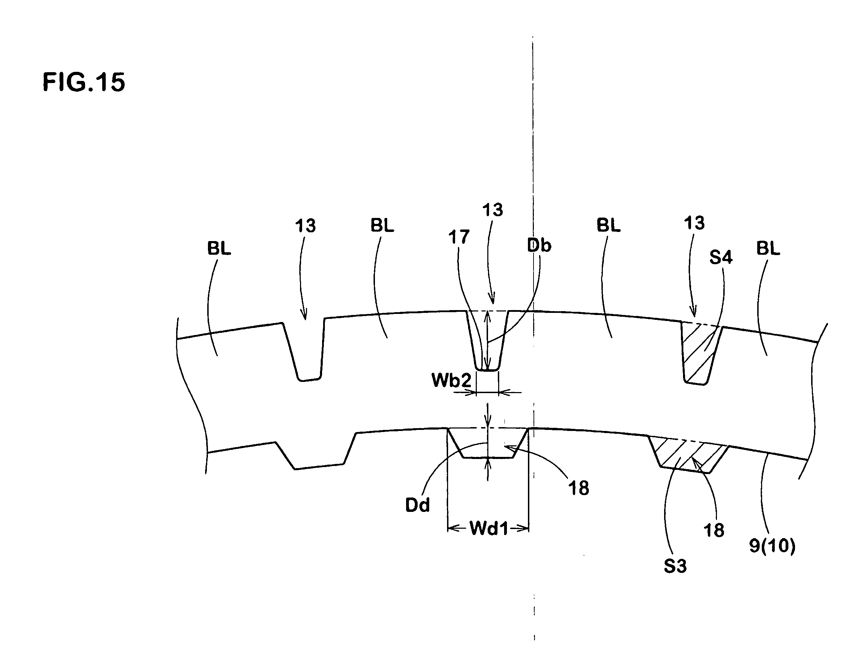

However, it is also possible to form the internal ribs 18 along only the axial grooves 13 extending crosswise to the circumferential direction as shown in Figs.14 and 15, or
the internal ribs 14 and 18 along both of the main grooves 12 and the axial grooves 13.

when the internal ribs 18 are provided beneath the axial grooves 13, the tread rigidity is increased in the vicinity of the axial groove bottom, and the occurring of cracks at the bottom 17 of the axial grooves 13 can be controlled, and the durability is improved in the same way as explained in connection with the internal ribs 14.

In order to improve the pattern noise during running by spreading the noise frequency spectrum into a wide frequency range, so called variable pitching method can be employed in the tread pattern.

In this embodiment, three different pitches having circumferential lengths EL, EM and ES (EL>EM>ES) are arranged circumferentially of the tire in a specific sequence.

As shown in Fig.14, one pitch can be defined by one axial groove 13 and one adjacent block BL.

In general, in the case of tires in which variable pitching methods are employed, there is a tendency that the tangential force variation (TFV) becomes increased, because grooved parts provided with axial grooves are decreased in the rigidity, and such decreased rigidity parts are arranged around the tire at irregular intervals due to the variable pitches.

In order to avoid such a deterioration of TFV, it is preferred to employ a similar variable pitching method in arranging the internal ribs 18 which form an internal pattern ti. Specifically, pitches, each of which is defined by one internal rib 18 and one adjacent resultant depressed portion 10a, having three different circumferential lengths PS, PM and PL (PL>PM>PS) are arranged, corresponding to the pitches of the axial grooves 13. In other words, the pitches of PS, PM and PL in the internal pattern ti are located beneath the pitches of ES, EM and EL in the tread pattern, respectively.

As shown in Fig.15, in the case of the internal rib 18 disposed beneath the axial groove 13, the width Wd1 of the internal rib 18 at the inner surface 10 is preferably set in a range of not less than 150 %, more preferably not less than 180 %, still more preferably not less than 210 %, but not more than 250 %, more preferably not more than 240 %, still more preferably not more than 230 % of the width wb2 of the axial groove 13 at the groove bottom.

The height Dd of the internal rib 18 from tire inner surface 10 is preferably set in a range of not less than 30 %, more preferably not less than 35 %, still more preferably not less than 40, but not more than 60 %, more preferably not more than 55 %, still more preferably not more than 50 % of the depth Db of the axial groove 13.

The cross-sectional area s3 of the internal rib 18 in the cross section perpendicular to its longitudinal direction is preferably set in a range of not less than 50 %, more preferably not less than 70 %, but not more than 100 %, more preferably not more than 90 % the cross-sectional area S4 of the axial groove 13 in the cross section perpendicular to its longitudinal direction.

As having been explained, the internal pattern comprises internal ribs 14, 18 formed along one or more of the tread grooves 11. The above-explained advantages of the internal rib is most effective when the internal rib 14 is formed along the main groove 12 having a width wb1 of not less than 5.0 mm because the rigidity difference between the grooved part and rib L1 or block BL is relatively small if the groove width Wb1 is less than 5.0 mm.

### Comparison tests

Pneumatic tires having the specifications shown in Table 1 were made and tested as follows.

The specifications common to all the test tires are as follows:
Tire size: 225/50R16
wheel rim size: 16x7.5JJ
Main groove
   groove bottom width wa2:7.0 mm
   depth Da:8.2 mm
   cross-sectional area S2:66.0sq.mm
Axial groove
   groove bottom width wb2:5.0 mm
   depth Db:8.0 mm
   cross-sectional area S4:48.0sq.mm

In the case that a variable pitching method was employed, the number of different pitches was 5, and the pitch arrangement in the tread pattern and the pitch arrangement of the internal ribs were:-
tread pattern:
   CCAAABCCEEEEEDCBBABABAAABCCDBABCEDCCABDDC EEEEDCCBABCEDCBDDCBABCCEDDDDCCBCD
internal ribs:
   ccaaabcceeeeedcbbababaaabccdbabcedccabddc eeeedccbabcedcbddcbabcceddddccbcd
pitch A: pitch B: pitch C: pitch D: pitch E
   = pitch a: pitch b: pitch c: pitch d: pitch e
   = 125:112.5:100:87.5:75

### Durability test:

using a tire test drum, each test tire inflated to 150 kPa was run at a speed of 80 km/h under a tire load of 8.16 kN, while being exposed to an atmosphere containing 80 pphm of Ozone. The test tire was examined periodically for cracking, and the running distance until cracks occured at five or more positions per one main groove was measured. The results are indicated by an index based on Ref.1 tire being 100, wherein the larger the value, the better the durability.

### Tire weight:

The weight of the tire is indicated by an index based on Ref.1 tire being 100, wherein the smaller the value, the lighter the tire.

### Drainage test:

A test car provided on all four wheels with same test tires was run along a 100 meter radius circle on an asphalt road partially provided with a 5 mm depth 20 m long water pool, and the lateral acceleration (lateral G) during running in the water pool was measured at the front wheels, gradually increasing the speed entering into the water pool, to obtain the average for the speed range of from 50 to 80 km/h. The results are indicated in table 1 by an index based on Ref.1 tire being 100, wherein the larger value is better. uniformity test:
using a tire uniformity tester, eight samples of each test tire were measured for the radial force variation (RFV) and tangential force variation (TFV) at a running speed of 120 km/h under a tire load (vertical load) of 4.71 kN, and the average value of RFV and the average value of TFV were was obtained.
   The results are indicated in table 1 by an index based on Ref.1 tire being 100, wherein the smaller the value, the better the uniformity.

Form the test results, it was confirmed that the durability and uniformity can be improved.

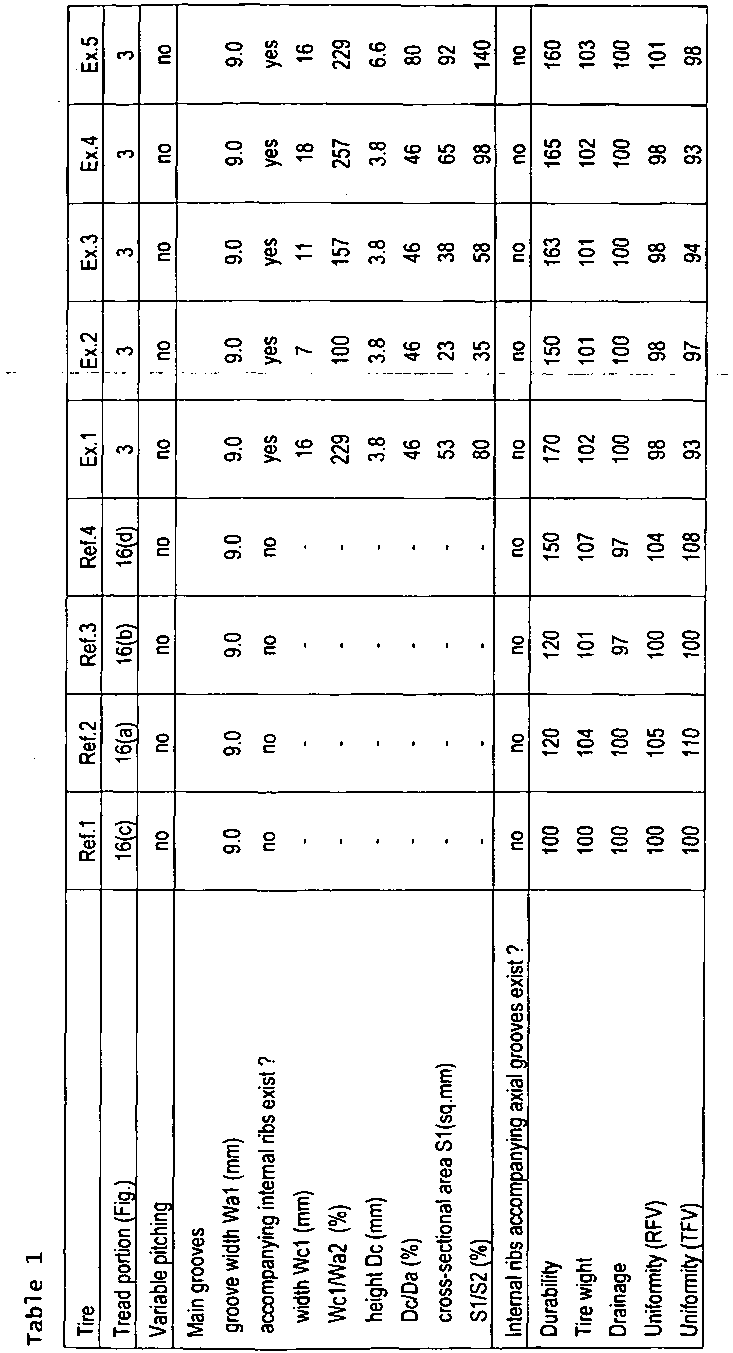

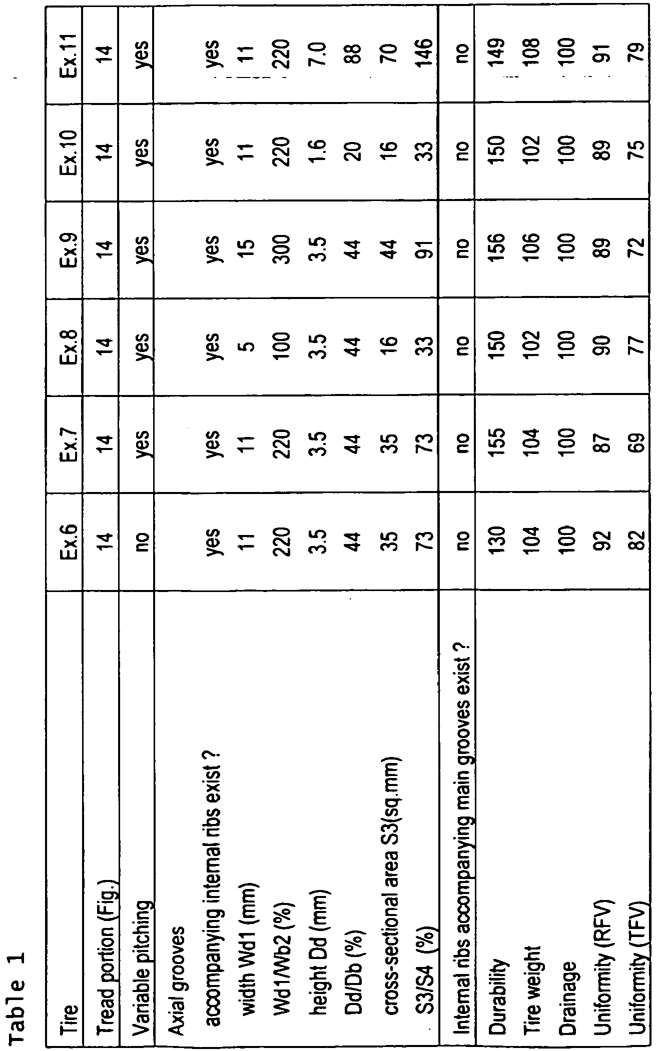

## Claims

1. A pneumatic tire (1) comprising
a tread portion (2) having a radially inner surface and a radially outer surface defining a tread surface, wherein
said tread portion (2) is provided with at least one tread groove (11) disposed in the radially outer surface and accompanied by an internal rib (14) disposed in the radially inner surface beneath the tread groove (11) and protruding from the radially inner surface.

2. The pneumatic tire according to claim 1, wherein
said at least one tread groove (11) includes at least one circumferentially extending main groove (12) having a groove width of not less than 5.0 mm.

3. The pneumatic tire according to claim 1, wherein
said at least one tread groove (11) includes at least one axial groove (13) extending crosswise to the tire circumferential direction.

4. The pneumatic tire according to claim 1, wherein
said at least one tread groove (11) includes at least one circumferentially extending main groove (12) having a groove width of not less than 5.0 mm, and
at least one axial groove (13) extending crosswise to the tire circumferential direction.

5. The pneumatic tire according to claim 3 or 4, wherein
said at least one axial groove (13) is a plurality of axial grooves, and
the axial grooves (13) and the accompanying internal ribs are arranged circumferentially of the tire with variable pitches.

6. The pneumatic tire according to claim 1, wherein
the tread groove (11) has a bottom width at the groove bottom, and the accompanying internal rib (14) has a width in a range of from 150 to 250 % of the bottom width.

7. The pneumatic tire according to claim 1, wherein
the tread groove (11) has a depth, and the accompanying internal rib (14) has a height in a range of from 30 to 60 % of the depth.

8. The pneumatic tire according to claim 1, wherein
the cross-sectional area of the internal rib (14) in the cross-section perpendicular to the longitudinal direction of the internal rib (14) is in a range of from 50 to 100 % of the cross-sectional area of the associated tread groove (11) in the cross-section perpendicular to the tread groove.

9. A method for manufacturing the pneumatic tire (1) as set forth in any one of the preceding claims, which comprises the steps of:
forming the unvulcanized raw tire (1A) on an annular core mold (21); and
vulcanizing the raw tire (1A) by placing the raw tire in a vulcanizing mold (M) together with the core mold (21), wherein
the core mold (21) is provided in the outer surface thereof with at least one molding groove (27) for molding at least one internal rib (14).

10. The method according to claim 9, wherein
said at least one molding groove (27) includes a circumferentially extending groove, and
the step of forming the unvulcanized raw tire (1A) comprises
winding an unvulcanized rubber strip (32) plural times around the core mold (21) so that the windings of the unvulcanized rubber strip fill up the circumferentially extending groove.

## Patentansprüche

1. Luftreifen (1), umfassend
einen Laufflächenabschnitt (2), der eine radial innere Oberfläche und eine radial äußere Oberfläche, die eine Laufflächen-Oberfläche definiert, aufweist, wobei
der Laufflächenabschnitt (2) mit zumindest einer Laufflächenrille (11) versehen ist, die in der radial äußeren Oberfläche angeordnet ist und von einer internen Rippe (14) begleitet ist, die in der radial inneren Oberfläche unterhalb der Laufflächenrille (11) angeordnet ist und von der radial inneren Oberfläche vorsteht.

2. Luftreifen nach Anspruch 1,
wobei die zumindest eine Laufflächenrille (11) zumindest eine sich in Umfangsrichtung erstreckende Hauptrille (12) mit einer Rillenbreite von nicht weniger als 5,0 mm umfasst.

3. Luftreifen nach Anspruch 1,
wobei die zumindest eine Laufflächenrille (11) zumindest eine axiale Rille (13) umfasst, die sich quer zu der Reifenumfangsrichtung erstreckt.

4. Luftreifen nach Anspruch 1,
wobei die zumindest eine Laufflächenrille (11) zumindest eine sich in Umfangsrichtung erstreckende Hauptrille (12) mit einer Rillenbreite von nicht weniger als 5,0 mm und zumindest eine axiale Rille (13) umfasst, die sich quer zu der Reifenumfangsrichtung erstreckt.

5. Luftreifen nach Anspruch 3 oder 4, wobei
die zumindest eine axiale Rille (13) eine Vielzahl von axialen Rillen ist, und
die axialen Rillen (13) und die begleitenden internen Rippen in Umfangsrichtung des Reifens mit variablen Teilungsabständen angeordnet sind.

6. Luftreifen nach Anspruch 1,
wobei die Laufflächenrille (11) eine Grundbreite an dem Rillengrund aufweist, und die begleitende interne Rippe (14) eine Breite in einem Bereich von 150 bis 250 % der Grundbreite aufweist.

7. Luftreifen nach Anspruch 1,
wobei die Laufflächenrille (11) eine Tiefe aufweist, und die begleitende interne Rippe (14) eine Höhe in einem Bereich von 30 bis 60 % der Tiefe aufweist.

8. Luftreifen nach Anspruch 1,
wobei die Querschnittsfläche der internen Rippe (14) in dem Querschnitt senkrecht zu der Längsrichtung der internen Rippe (14) in einem Bereich von 50 bis 100 % der Querschnittsfläche der zugehörigen Laufflächenrille (11) in dem Querschnitt senkrecht zu der Laufflächenrille liegt.

9. Verfahren zum Herstellen des Luftreifens (1), wie er in einem der vorhergehenden Ansprüche dargelegt ist, das die Schritte umfasst:
Bilden eines unvulkanisierten Rohreifens (1A) auf einer ringförmigen Kernform (21); und
Vulkanisieren des Rohreifens (1A), indem der Rohreifen in eine Vulkanisierform (M) zusammen mit der Kernform (21) platziert wird, wobei
die Kernform (21) in ihrer Außenoberfläche mit zumindest einer Formrille (27) zum Formen zumindest einer internen Rippe (14) versehen ist.

10. Verfahren nach Anspruch 9, wobei
die zumindest eine Formrille (27) eine sich in Umfangsrichtung erstreckende Rille umfasst, und
der Schritt des Bildens des unvulkanisierten Rohreifens (1A) das mehrmalige Wickeln eines unvulkanisierten Kautschukstreifens (32) um die Kernform (21) herum umfasst, so dass die Wicklungen des unvulkanisierten Kautschukstreifens die sich in Umfangsrichtung erstreckende Rille auffüllen.

## Revendications

1. Pneumatique (1) comprenant :
une partie de bande de roulement (2) ayant une surface radialement interne et une surface radialement externe définissant une surface de bande de roulement, dans lequel :
ladite partie de bande de roulement (2) est prévue avec au moins une rainure de bande de roulement (11) disposée dans la surface radialement externe et accompagnée par une nervure interne (14) disposée dans la surface radialement interne au-dessous de la rainure de bande de roulement (11) et faisant saillie de la surface radialement interne.

2. Pneumatique selon la revendication 1, dans lequel :
ladite au moins une rainure de bande de roulement (11) comprend au moins une rainure principale s'étendant de manière circonférentielle (12) ayant une largeur de rainure non inférieure à 5,0 mm.

3. Pneumatique selon la revendication 1, dans lequel :
ladite au moins une rainure de bande de roulement (11) comprend au moins une rainure axiale (13) s'étendant en diagonale par rapport à la direction circonférentielle du pneu.

4. Pneumatique selon la revendication 1, dans lequel :
ladite au moins une rainure de bande de roulement (11) comprend au moins une rainure principale s'étendant de manière circonférentielle (12) ayant une largeur de rainure non inférieure à 5,0 mm, et
au moins une rainure axiale (13) s'étendant en diagonale par rapport à la direction circonférentielle du pneu.

5. Pneumatique selon la revendication 3 ou 4, dans lequel :
ladite au moins une rainure axiale (13) est une pluralité de rainures axiales, et
les rainures axiales (13) et les nervures internes d'accompagnement sont agencées de manière circonférentielle par rapport au pneu avec des pas variables.

6. Pneumatique selon la revendication 1, dans lequel :
la rainure de bande de roulement (11) a une largeur de fond au niveau du fond de la rainure, et la nervure interne d'accompagnement (14) a une largeur représentant une valeur de l'ordre de 150 à 250 % de la largeur de fond.

7. Pneumatique selon la revendication 1, dans lequel :
la rainure de bande de roulement (11) a une profondeur, et la nervure interne d'accompagnement (14) a une hauteur représentant une valeur de l'ordre de 30 à 60 % de la profondeur.

8. Pneumatique selon la revendication 1, dans lequel :
la surface transversale de la nervure interne (14) dans la section transversale perpendiculaire à la direction longitudinale de la nervure interne (14) représente une valeur de l'ordre de 50 à 100 % de la surface transversale de la rainure de bande de roulement (11) associée dans la section transversale perpendiculaire à la rainure de bande de roulement.

9. Procédé pour fabriquer le pneumatique (1) selon l'une quelconque des revendications précédentes, qui comprend les étapes consistant à :
former un pneu cru non vulcanisé (1A) sur un moule de noyau annulaire (21) ; et
vulcaniser le pneu cru (1A) en plaçant le pneu cru dans un moule de vulcanisation (M) conjointement avec le moule de noyau (21), dans lequel :
le moule de noyau (21) est prévu dans sa surface externe avec au moins une rainure de moulage (27) pour mouler au moins une nervure interne (14).

10. Procédé selon la revendication 9, dans lequel :
ladite au moins une rainure de moulage (27) comprend une rainure s'étendant de manière circonférentielle, et
l'étape consistant à former le pneu cru non vulcanisé (1A) comprend l'étape consistant à :
enrouler une bande de caoutchouc non vulcanisé (32) plusieurs fois autour du moule de noyau (21) de sorte que les enroulements de la bande de caoutchouc non vulcanisé remplissent la rainure s'étendant de manière circonférentielle.
